# EUROPÄISCHE PATENTANMELDUNG

(11) **EP 2 385 288 A2**
(43) Veröffentlichungstag der Anmeldung: **09.11.2011**
(21) Anmeldenummer: 11164689.9
(22) Anmeldetag: 03.05.2011
(51) Int. Cl.: F16L 21/00, F16L 25/00, F16L 25/14

(54) **Exzenter-Zwischenfutter, und damit hergestellte Rohrverbindung**

(30) Priorität: 04.05.2010 DE 202010005366 U
(71) Anmelder: Funke Kunststoffe GmbH, 59071 Hamm-Uentrop (DE)
(72) Erfinder: Funke, Norbert, 48324 Sendenhorst (DE); Funke, Hans Günter, 48324 Sendenhorst (DE)
(74) Vertreter: Habbel, Ludwig

(57) **Zusammenfassung**

Die Erfindung bezieht sich auf ein Exzenter-Zwischenfutter (1) einer Rohrmanschette zur axialen Rohrverbindung, mit zwei axialen Enden, einer äußeren Mantelfläche (3), die einen Außendurchmesser des Zwischenfutters (1) definiert, und mit einer Innenfläche (4), die einen Innendurchmesser des Zwischenfutters definiert, wobei die Mantel- und Innenflächen im wesentlichen kreisrund sind, und wobei die Mittelpunkte der Außen- und Innendurchmesser versetzt zueinander vorgesehen sind, und wobei sich die Wandstärke des Zwischenfutters, ausgehend von einem Minimum, über ein Maximum wieder zu dem Minimum ändert.

## Beschreibung

### Beschreibung:

Die Erfindung betrifft ein Exzenter-Zwischenfutter einer Rohrmanschette, die zur axialen Rohrverbindung dient. Weiterhin betrifft die Erfindung die damit hergestellte Rohrverbindung.

In der Praxis tritt häufig die Situation auf, dass bei der Instandsetzung von beispielsweise unterirdisch verlegten Rohrleitungen bestimmte Abschnitte der Rohrleitung ausgewechselt werden, während andere Abschnitte des Rohrleitungssystems nach wie vor an Ort und Stelle verbleiben. Beispielsweise können alte Rohre aus keramischen Werkstoffen vorgesehen sein, die werkstoffbedingt eine relativ große Wandstärke aufweisen. An diese vorhandenen Rohre schließt dann häufig ein neuer Rohrleitungsabschnitt aus anderem Material an, beispielsweise aus Kunststoff, wobei dieser neue Rohrleitungsabschnitt einen geringeren Außendurchmesser aufweisen kann, selbst wenn der Innendurchmesser bzw. Nenndurchmesser beider Rohrleitungsabschnitte gleich ist, da Kunststoffrohre üblicherweise bezogen auf den freien Innendurchmesser eine geringere Wandstärke aufweisen als vergleichbare keramische Rohre.

Durch die verwendeten Rohrmanschetten ist es möglich, die beiden zu verbindenden Enden der beiden Rohrabschnitte axial voreinander anzuordnen und mithilfe der Rohrmanschette einen dichten Anschluss zwischen diesen beiden Rohrleitungsabschnitten sicherzustellen. Durch zirkumferent gleichmäßig wirkende Spannkräfte der Rohrmanschette werden üblicherweise die beiden Rohrleitungsabschnitte jeweils innerhalb der Rohrmanschette zentriert und folglich koaxial zueinander ausgerichtet, so dass bei gleichen Nenndurchmessern, also Innendurchmessern der beiden Rohrleitungsabschnitte ein nahezu ungestörter freier Rohrleitungsabschnitt sichergestellt ist.

Problematisch ist jedoch, wenn die Rohrleitungsabschnitte unterschiedliche Nenndurchmesser aufweisen, da sich dann bei koaxialer Ausrichtung beider Rohre ein umlaufender Versatz bzw. eine entsprechende Stoßkante zwischen den beiden aneinander grenzenden Rohrleitungsabschnitten ergibt. Je nach Fließrichtung innerhalb der Rohrleitung kann dieser Versatz eine störende Stufe darstellen, an der Verschmutzungen sedimentieren oder größere Partikel hängenbleiben können, so dass eine Verstopfung der Rohrleitung durch diese Kante gefördert werden kann.

Der Erfindung liegt die Aufgabe zugrunde, eine Rohrmanschette zur axialen Rohrverbindung dahingehend weiterzuentwickeln und eine damit herstellbare Rohrverbindung anzugeben, bei welcher zwei Rohrleitungsabschnitte unterschiedlicher Nenndurchmesser axial miteinander verbindbar sind, unter Vermeidung einer störenden Staukante.

Diese Aufgabe wird durch ein Exzenter-Zwischenfutter mit den Merkmalen des Anspruchs 1 gelöst sowie durch eine Rohrverbindung nach Anspruch 11.

Die Erfindung schlägt mit anderen Worten vor, die Rohrmanschette dem Rohr mit dem inneren Durchmesser nicht unmittelbar, sondern unter Zwischenschaltung des vorschlagsgemäßen Zwischenfutters anzulegen, da das Zwischenfutter über seinen gesamten Umfang gesehen zwischen einer minimalen und einer maximalen Wandstärke wechselt, wird das in dem Zwischenfutter angeordnete Rohr innerhalb der Rohrmanschette nicht zentrisch gehalten, so dass sich beim Anschluss der beiden Rohrleitungsabschnitte aneinander keine axiale Fluchtung dieser beiden Rohrleitungsabschnitte ergibt. Vielmehr kann mittels des vorschlagsgemäßen Zwischenfutters das Rohr mit dem geringeren Durchmesser niedriger angeordnet werden, so dass bei entsprechender Dimensionierung des Zwischenfutters die Sohlen der beiden aneinander grenzenden Rohrleitungsabschnitte, also die tiefsten Stellen der inneren Rohroberflächen, etwa höhengleich ausgerichtet sind, so dass die störende Staustufe nicht entsteht. Zum Scheitel, also dem obersten Abschnitt der inneren Rohroberfläche hin, ergibt sich hingegen ein Versatz zwischen den beiden Rohren. Die Erfindung geht dabei allerdings von der Überlegung aus, dass die Rohrleitungen nur in seltenen Fällen über ihren gesamten freien Innenquerschnitt gefüllt sind, so dass Behinderungen der Durchströmbarkeit der gesamten Rohrleitung kaum zu befürchten sind. Sollten an diesem oberen Abschnitt der inneren Rohroberfläche durch den dort vorgesehenen Versatz hingegen Stoffe aufgehalten werden, so sinken diese bei später abnehmendem Flüssigkeitsspiegel innerhalb der Rohrleitung ab und können an dem nun zunehmend kleiner werdenden Versatz zwischen den beiden Rohrleitungsabschnitten problemlos entlang gleiten.

Vorteilhaft kann die Innenfläche des Zwischenfutters wenigstens eine umfangsmäßige Rippe aufweisen, so dass im Vergleich zu einer gleichmäßigen Ausgestaltung der inneren Oberfläche des Zwischenfutters im Bereich dieser Rippe ein verstärkter Anpressdruck bewirkt wird und somit eine zuverlässige Dichtigkeit zwischen dem Zwischenfutter und der davon umfassten Rohrleitung gewährleistet wird.

Insbesondere können vorteilhaft mehrere derartige Rippen voneinander beabstandet über die axiale Länge des Zwischenfutters vorgesehen sein, um auf diese Weise die Dichtungswirkung noch zuverlässiger gewährleisten zu können.

Vorteilhaft kann dort, wo das Zwischenfutter seine größte Wandstärke aufweist, stirnseitig eine tastbare Markierung vorgesehen sein. Die tastbare Markierung ermöglicht es, das Zwischenfutter entweder von Hand oder mittels eines entsprechenden Handhabungsgerätes korrekt derart auszurichten, dass die größte Wandstärke des Zwischenfutters auf der Oberseite des vom Zwischenfutter umfassten Rohres vorgesehen ist, so dass auf diese Weise die maximale Absenkwirkung erzielt wird, die mithilfe des Zwischenfutters innerhalb der Rohrmanschette möglich ist. Dadurch, dass die Markierung nicht auf der äußeren Umfangsfläche des Zwischenfutters vorgesehen ist, sondern an dessen Stirnseite, wird eine möglichst gleichmäßige Anlage der Rohrmanschette am Zwischenfutter nicht beeinträchtigt.

Vorteilhaft kann das Zwischenfutter aus einem Elastomerwerkstoff bestehen. Dieser ermöglicht einerseits die Übertragung von ausreichend hohen Druckkräften, um eine zuverlässig dichte Anpressung des Zwischenfutters an dem von ihm umfassten Rohr zu gewährleisten, und ermöglicht andererseits eine ausreichend gute Verformbarkeit, um sich optimal an die Rohroberfläche anlegen zu lassen und die gewünschte Dichtigkeit herzustellen. Zudem ist die Verformbarkeit des aus einem Elastomerwerkstoff bestehenden Zwischenfutters vorteilhaft, um ein problemloses Aufziehen des Zwischenfutters auf ein Rohrende zu unterstützen. Dabei kann das Zwischenfutter beispielsweise mit einer Shore A-Härte von 55 bis 75 Einheiten ausgestaltet sein.

Eine zuverlässige Montage des Zwischenfutters auf dem Rohrende kann vorteilhaft durch einen Anschlag unterstützt werden, der über die Innenfläche des Zwischenfutters hinaus radial nach innen ragt. Auf diese Weise kann das Zwischenfutter problemlos auf das Rohrende aufgeschoben werden, bis erkennbar das Rohrende an diesen Anschlag des Zwischenfutters stößt. Auf diese Weise ist einerseits die korrekte Ausrichtung des Zwischenfutters auf dem Rohrende sichergestellt, so dass beispielsweise ein Schrägsitz vermieden werden kann und andererseits ist auf diese Weise sichergestellt, dass das Zwischenfutter ausreichend weit auf das Rohr aufgeschoben ist.

Auf einfache Weise kann der Anschlag als zirkumferent umlaufender Ring ausgestaltet sein, so dass bei einfacher Herstellung des Zwischenfutters und angesichts des elastischen Werkstoffs ein ausreichend starker Anschlag verwirklicht werden kann, der nicht versehentlich überwunden wird und zu einem ungewollten, zu weiten Aufschieben des Zwischenfutters auf das Rohrende führen könnte.

Vorteilhaft kann das Zwischenfutter eine eventuell sich einstellende, ungewollte Lageabweichung, wie z. B. eine Winkelabweichung, eine Stauchung oder Dehnung oder auch einen Höhenversatz ("Sprung in der Sohle") zwischen den beiden Rohrleitungsabschnitten ausgleichen: Hierzu kann eine so genannte Flexibilitätszone vorgesehen sein, die dadurch gekennzeichnet ist, dass das Zwischenfutter eine Wandstärke aufweist, die geringer ist als die maximale Wandstärke, die das Zwischenfutter ansonsten aufweist. Es wird also ein ringförmig umlaufender Bereich mit vergleichsweise geringer Wandstärke geschaffen, der eine leichte Verformbarkeit des Zwischenfutters ermöglicht. Sollte nach Herstellung der Rohrverbindung aufgrund von Setzungen im Boden eine der beiden Rohrleitungsabschnitte geringfügig absinken und sich dadurch ein Winkelversatz zwischen den beiden Rohrleitungsabschnitten ergeben, so ermöglicht die Flexibilitätszone eine gewisse Nachgiebigkeit, so dass sich das entsprechend abgesenkte Rohr geringfügig schräg ausrichten kann und schräg an das andere Rohr anschließen kann, so dass das abgesenkte Rohr nicht auf Knickung beansprucht und ggf. beschädigt wird.

Vorteilhaft kann die Flexibilitätszone an einem der beiden stirnseitigen Enden des Zwischenfutters vorgesehen sein, so dass das Zwischenfutter derart montiert werden kann, dass die Flexibilitätszone am freien Ende des entsprechenden Rohrs vorgesehen ist, wo dieses mit dem Zwischenfutter versehene Rohr an den jeweils anderen Rohrleitungsabschnitt anschließt.

Ein Ausführungsbeispiel eines Exzenter-Zwischenfutters und einer unter dessen Verwendung hergestellten Rohrverbindung wird nachfolgend anhand der rein schematischen Darstellungen näher erläutert. Dabei zeigen die
- Fig. 1 ― 3: verschiedene Ansichten des Zwischenfutters und
- Fig. 4: einen axialen Schnitt durch eine Rohrverbindung.

In den Zeichnungen ist mit 1 jeweils ein Zwischenfutter bezeichnet, welches als Ring aus elastomerem Werkstoff ausgestaltet ist.

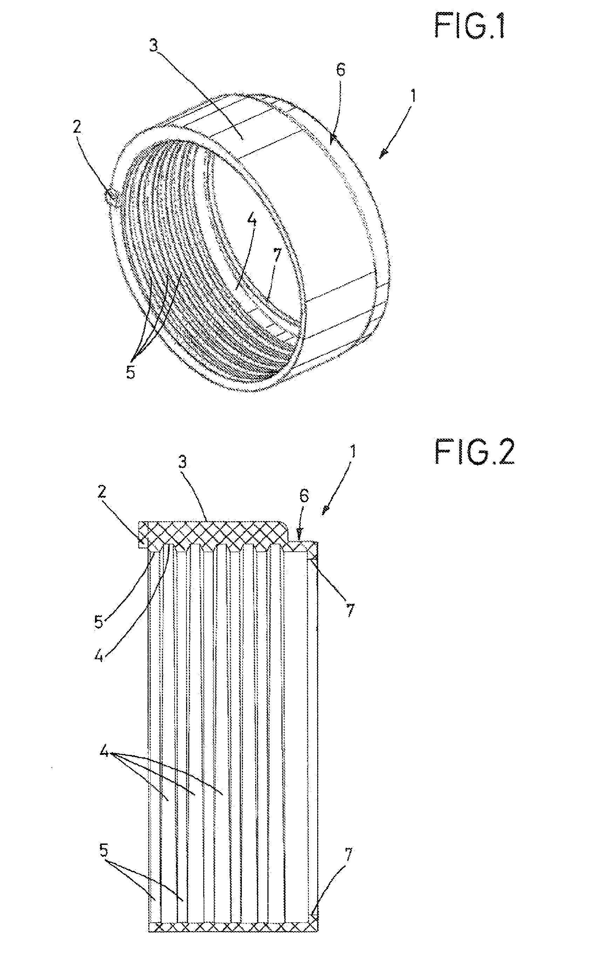

Fig. 1 zeigt das Zwischenfutter in einer perspektivischen Ansicht und, hinsichtlich der bevorzugten Einbaulage, "auf der Seite liegend". Dies bedeutet, dass die minimale Wandstärke des Zwischenfutters 1 rechts und die maximale Wandstärke des Zwischenfutters 1 links ausgerichtet ist, wobei in der normalen Einbausituation das Zwischenfutter 1 derart ausgerichtet wird, dass seine maximale Wandstärke nicht seitlich, sondern oben angeordnet ist. Diese Stelle ist durch eine tastbare Markierung 2 gekennzeichnet, die an der Stirnseite des Zwischenfutters 1 vorgesehen ist.

Aus Fig. 1 ist weiterhin ersichtlich, dass das Zwischenfutter eine äußere, glatte Mantelfläche 3 aufweist, sowie eine Innenfläche 4, die mit einer Mehrzahl von Rippen 5 versehen ist, so dass das Zwischenfutter 1 einem Rohr gleicht.

Fig. 2 zeigt das Zwischenfutter 1 im Querschnitt: Es ist in dieser Ansicht derart ausgerichtet, dass sich sein Abschnitt mit der größten Wandstärke oben befindet, so dass dort die Markierung 2 als tastbare Markierung auf der Stirnseite des Zwischenfutters 1 ersichtlich ist. Im Unterschied zu der oben ersichtlichen vergleichsweise großen Wandstärke des Zwischenfutters 1 ist die Wandstärke im unteren Bereich des Zwischenfutters 1 deutlich geringer.

Allerdings weist das Zwischenfutter 1 seine große Wandstärke nicht über seine ganze axiale Länge auf: Am in Fig. 2 rechts dargestellten Ende des Zwischenfutters 1 ist zirkumferent umlaufend eine vergleichsweise geringe Wandstärke vorgesehen, so dass das Zwischenfutter 1 in diesem als Flexibilitätszone 6 bezeichneten Bereich mit vergleichsweise geringem Kraftaufwand verformbar ist und entsprechend nachgiebig ist.

An diesem stirnseitigen Ende des Zwischenfutters 1, an dem auch die Flexibilitätszone 6 vorgesehen ist, bildet das Zwischenfutter 1 einen zirkumferent umlaufenden Anschlag 7 aus, der sich über die Innenfläche 4 hinaus radial nach innen erstreckt und somit eine Anschlagkante darstellt, die den Vorschub des Zwischenfutters 1 auf einem Rohr begrenzt, wenn das Zwischenfutter 1 auf das Rohrende aufgeschoben wird.

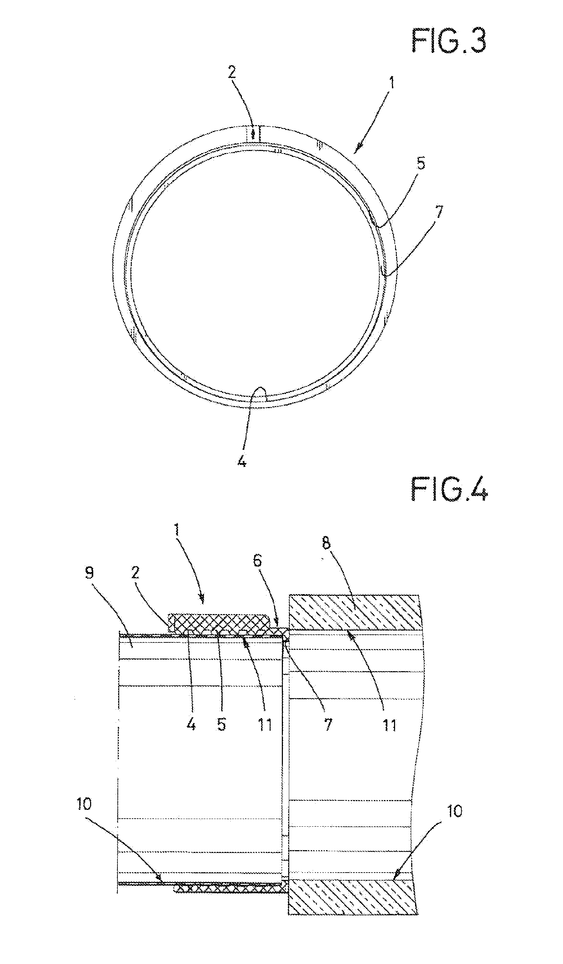

Aus Fig. 3 ist eine stirnseitige Ansicht auf das Zwischenfutter 1 ersichtlich. Abgesehen von der deutlich hervorragenden Markierung 2 ist der obere bzw. Scheitelbereich des Zwischenfutters 1 auch durch Beschriftungen gekennzeichnet, die in mehreren Sprachen ausgeführt sind sowie durch einen Pfeil, der im Bereich der Markierung 2 angeordnet und nach oben weisend ausgerichtet ist. Die Beschriftungen und der Pfeil sind als erhöhte bzw. vertiefte Flächen in der Oberfläche des Zwischenfutters 1 ausgestaltet, so dass auch dann, wenn nicht die gesamte Markierung vorspringend ausgestaltet wäre, eine eindeutige und tastbare, ggf. maschinell erkennbare, Markierung für den obersten Punkt des Zwischenfutters 1 gegeben ist.

Die Einbausituation des Zwischenfutters 1 in einer Rohrverbindung ist aus Fig. 4 ersichtlich: Ein rechts dargestelltes Keramikrohr 8 weist eine vergleichsweise große Wandstärke auf, und ein links dargestelltes Rohr 9 aus Kunststoff weist eine demgegenüber sehr viel geringere Wandstärke auf. Die beiden Rohre 8 und 9 stoßen axial voreinander und aufgrund unterschiedlicher Innendurchmesser würde sich ein zirkumferent umlaufender Versatz zwischen den beiden Rohren 8 und 9 ergeben, wenn diese beiden axial fluchtend miteinander verbunden würden. Für eine derartige Verbindung ist eine in der Zeichnung nicht dargestellte Rohrmanschette vorgesehen.

Das linke Rohr 9 wird gegenüber der beschriebenen axialen Ausrichtung beider Rohre tiefer angeordnet durch die Verwendung des Zwischenfutters 1. Die erwähnte Rohrmanschette spannt nämlich das Zwischenfutter 1 mitsamt dem Rohr 9 mittig, und aufgrund der exzentrischen, tiefer angeordneten Ausrichtung des Rohres 9 innerhalb des Zwischenfutters 1 wird ein geringer Höhenversatz zwischen beiden Rohren 8 und 9 im Bereich von deren so genannten Sohlen 10 erreicht, während demgegenüber die beiden Scheitel 11, also die beiden oberen Abschnitte der inneren Rohroberflächen, einen demgegenüber deutlich größeren Versatz zueinander aufweisen.

## Patentansprüche

1. Exzenter-Zwischenfutter (1) einer Rohrmanschette zur axialen Rohrverbindung,
mit zwei axialen Enden,
einer äußeren Mantelfläche (3), die einen Außendurchmesser des Zwischenfutters (1) definiert,
und mit einer Innenfläche (4), die einen Innendurchmesser des Zwischenfutters (1) definiert,
wobei die Mantel- und Innenflächen (3, 4) im wesentlichen kreisrund sind,
und wobei die Mittelpunkte der Außen- und Innendurchmesser versetzt zueinander vorgesehen sind, derart, dass sich die Wandstärke des Zwischenfutters (1), ausgehend von einem Minimum, über ein Maximum wieder zu dem Minimum ändert.

2. Exzenter-Zwischenfutter nach Anspruch 1,
**dadurch gekennzeichnet,**
**dass** die Innenfläche (4) wenigstens eine zirkumferent umlaufende Rippe (5) aufweist.

3. Exzenter-Zwischenfutter nach Anspruch 2,
**dadurch gekennzeichnet,**
**dass** über die axiale Länge der Innenfläche (4) gesehen die Innenfläche (4) mehrere hintereinander angeordnete und voneinander beabstandete Rippen (5) aufweist.

4. Exzenter-Zwischenfutter nach einem der vorhergehenden Ansprüche,
**dadurch gekennzeichnet,**
**dass** dort, wo das Zwischenfutter (1) seine größte Wandstärke aufweist, stirnseitig eine tastbare Markierung (2) vorgesehen ist.

5. Exzenter-Zwischenfutter nach einem der vorhergehenden Ansprüche,
**dadurch gekennzeichnet,**
**dass** das Zwischenfutter (1) aus einem Elastomerwerkstoff besteht.

6. Exzenter-Zwischenfutter nach Anspruch 5,
**dadurch gekennzeichnet,**
**dass** das Zwischenfutter (1) aus einem Werkstoff mit einer Shore-A-Härte zwischen 55 bis 75 besteht.

7. Exzenter-Zwischenfutter nach einem der vorhergehenden Ansprüche,
**gekennzeichnet durch**
einen über die Innenfläche (4) hinaus radial nach innen ragenden Anschlag (7) an seinem einen axialen Ende.

8. Exzenter-Zwischenfutter nach Anspruch 7,
**dadurch gekennzeichnet,**
**dass** der Anschlag (7) als zirkumferent umlaufender Ring ausgestaltet ist.

9. Exzenter-Zwischenfutter nach einem der vorhergehenden Ansprüche,
**gekennzeichnet durch**
eine zirkumferent umlaufende Flexibilitätszone (6), innerhalb welcher das Zwischenfutter (1) eine Wandstärke aufweist, die geringer ist als die maximale Wandstärke.

10. Exzenter-Zwischenfutter nach Anspruch 7,
**dadurch gekennzeichnet,**
**dass** die Flexibilitätszone (6) an einem der beiden stirnseitigen Enden des Zwischenfutters (1) vorgesehen ist.

11. Rohrverbindung,
mit zwei axial aneinander grenzenden Rohren (8, 9),
wobei die beiden Rohre (8, 9) unterschiedliche Außendurchmesser aufweisen,
und mit einer Axialmanschette,
und mit einem Exzenter-Zwischenfutter (1) nach einem der vorhergehenden Ansprüche,
wobei das Zwischenfutter (1) auf dem Rohr (9) angeordnet ist, welches den geringeren Außendurchmesser aufweist, und wobei das Zwischenfutter (1) das Minimum seiner Wandstärke unterhalb dieses Rohres (9) aufweist, derart, dass die Sohlen (10) innerhalb der beiden Rohre (8, 9) einen geringeren Höhenversatz aufweisen als die Scheitel (11) der beiden inneren Rohroberflächen.
